# FASCICULE DE BREVET EUROPEEN

(11) **EP 0 807 232 B1**
(45) Date de publication et mention de la délivrance du brevet: **02.12.1998**
(21) Numéro de dépôt: 96903045.1
(22) Date de dépôt: 02.02.1996
(51) Int. Cl.: F25C 1/00, B01J 2/06

(54) **PROCEDE ET DISPOSITIF DE FABRICATION ET DE SEPARATION DE PARTICULES SOLIDES**
VERFAHREN UND VORRICHTUNG ZUR HERSTELLUNG UND ENTFERNUNG VON FESTSTOFFTEILCHEN
METHOD AND DEVICE FOR PRODUCING AND SEPARATING SOLID PARTICLES

(30) Priorité: 03.02.1995 FR 9501471
(43) Date de publication de la demande: 19.11.1997
(73) Titulaire: COMMISSARIAT A L'ENERGIE ATOMIQUE, 75015 Paris (FR)
(72) Inventeur: MANIFICAT, André, F-38100 Grenoble (FR); PETIT-PERRIN, Jean-Paul, F-69370 Saint-Didier-au-Mont-d'Or (FR); CHIELLO, Bernard, F-69120 Vaulx-en-Velin (FR)
(74) Mandataire: Myon, Gérard Jean-Pierre
(86) Numéro de dépôt international: FR9600182
(87) Numéro de publication internationale: WO9624017

(56) Documents cités:
- WO-A-89/10522
- DE-A- 2 805 676
- GB-A- 1 376 972
- US-A- 4 655 047
- US-A- 4 754 610

## Description

La présente invention a trait à un procédé et son dispositif pour la fabrication de particules solides à partir d'un liquide et la séparation de particules solides contenues dans un bain de liquide réfrigérant. Le procédé de fabrication et de séparation de particules solides est destiné par exemple à l'obtention de billes de glace pour le nettoyage de surface par projection des particules, ou à la constitution de produits solides à partir de mélange acqueux. Enfins le procédé de fabrication et de séparation est prévu pour obtenir des particules solides à partir de liquides dont la chaleur latente de solidification est inférieure à celle de l'eau pur.

On connaît, d'après le brevet français 2 630 668, un procédé et un dispositif de fabrication de billes de glace pour les traitements de surface. Le procédé consiste à disperser par gravité un spectre de gouttelettes d'eau dans une colonne de gaz froid, pour que les gouttelettes d'eau traversent par gravité ladite colonne de gaz froid et se refroidissent pour se solidifier superficiellement avant de tomber dans un bain de liquide réfrigérant où elles se solidifient entièrement sous forme de billes de glace. Le dispositif permettant la mise en oeuvre du procédé comprend une colonne d'échange alimentée en gaz froid et en gouttelettes d'eau qui sont régulièrement réparties par l'intermédiaire d'un injecteur pour créer un spectre de gouttelettes. Le dispositif comprend également un réceptacle solidaire de la colonne d'échange comportant une rampe pour amener le liquide réfrigérant, un cône de réception des billes de glaces et un orifice d'évacuation des billes de glace au fond du cône.

Le réceptacle présente une forme cylindro-conique dans lequel est introduit un liquide réfrigérant tel que de l'azote liquide en vue de solidifier entièrement les gouttelettes d'eau qui le traversent.

On remarque, lorsque les gouttes d'eau partiellement solidifiées abordent à la fin de leur chute libre la surface du liquide réfrigérant, un phénomène de caléfaction dû à l'évaporation de l'azote liquide. Le phénomène de caléfaction retient chaque bille de glace en sustentation jusqu'à ce qu'elle ait atteint la température de l'azote gazeux provenant du changement de phase de l'azote liquide.

On constate que c'est seulement après la solidification complète de la bille de glace que celle-ci entame sa descente par gravité jusqu'au bas du réceptacle cylindro-conique. Le phénomène de caléfaction provoque également un taux d'occupation élevé à la surface du bain d'azote liquide, risquant de constituer soit des billes hors calibre, soit des agglomérats gênant fortement la fabrication des billes de glace et l'extraction de ces dernières au niveau de la vis d'Archimède.

On note un second phénomène gênant dans la fabrication des billes de glace qui est induit par la faible différence de masse volumique entre la glace à - 196° et celle de l'azote liquide, soit respectivement environ 0,850 et 0,8068. La faible différence de masse volumique influe sur la dynamique de descente par gravité des billes de glace, d'où une forte tendance à la constitution d'agglomérats au niveau de la surface du bain d'azote liquide.

DE-A-2 805 676, vis-à-vis duquel les revendications 1 et 12 ont été délimitées, divulgue un procédé et un dispositif de fabrication de billes solides comprenant une alimentation en gaz froid, un agitateur à pale, un réceptacle et une vis d'Archimède appartenant à un dispositif d'extraction. Dans ce dispositif, le mouvement du liquide dans le fond du réceptacle n'est pas dirigé vers le bas, d'où il résulte des risques de turbulences et d'engorgement.

C'est à ces inconvénients qu'entend plus particulièrement remédier l'invention en proposant un procédé et un dispositif dans lesquels la circulation des billes vers le dispositif d'extraction est facilitée.

Dans cet esprit, l'invention concerne un procédé pour la fabrication et l'extraction de particules solides en forme de billes, consistant à disperser par gravité un spectre de gouttelettes de particules dans une colonne de gaz froid pour que les gouttelettes traversent par gravité ladite colonne de gaz froid et se refroidissent pour se solidifier superficiellement avant de tomber dans un bain de liquide réfrigérant et à extraire en continu les billes du bain de liquide réfrigérant, caractérisé en ce qu'il consiste en outre à déplacer le bain de liquide réfrigérant dans un mouvement lent suivant le sens d'un vortex dans un cône à profil asymétrique constitué d'un assemblage de parois inclinées conformées pour réaliser deux zones distinctes d'inclinaison progressives et différentes, de façon à créer une vague dont les forces sont dirigées vers le bas pour permettre la descente des gouttelettes de particules pour qu'elles se solidifient entièrement sous forme de billes.

L'invention concerne également un dispositif permettant la mise en oeuvre de ce procédé, à savoir un dispositif pour la fabrication et l'extraction de particules solides en forme de billes du genre comprenant une colonne d'échange alimentée en gaz froid, un injecteur de particules à solidifier et un réceptacle supportant la colonne et dont le fond comporte un orifice d'évacuation des particules solidifées en forme de billes, ledit orifice communiquant avec une tubulure dans laquelle est entraînée en rotation une vis d'Archimède d'un dispositif d'extraction pour l'évacuation en continu des particules solides, caractérisé en ce que ledit fond présente la forme d'un cône à profil asymétrique constitué d'un assemblage de parois inclinées conformées pour réaliser deux zones distinctes d'inclinaisons progressives et différentes, une pale d'un agitateur plongeant à l'intérieur dudit cône asymétrique pour déplacer, dans un mouvement lent, un bain de liquide réfrigérant contenu dans le réceptacle en créant une vague dont les forces sont dirigées vers le bas. Le dessin annexé, donné à titre d'exemple, permettra de mieux comprendre l'invention, les caractéristiques qu'elle présente et les avantages qu'elle est susceptible de procurer :

Fig. 1 est une vue en perspective illustrant le dispositif pour la mise en oeuvre du procédé de fabrication et d'extraction de particules solides suivant l'invention.

Fig. 2 est une coupe schématique représentant le réceptacle du dispositif de fabrication d'extraction de particules solides.

Fig. 3 est une vue de dessus suivant III-III de fig. 2 montrant le profil en forme de cône asymétrique du réceptacle.

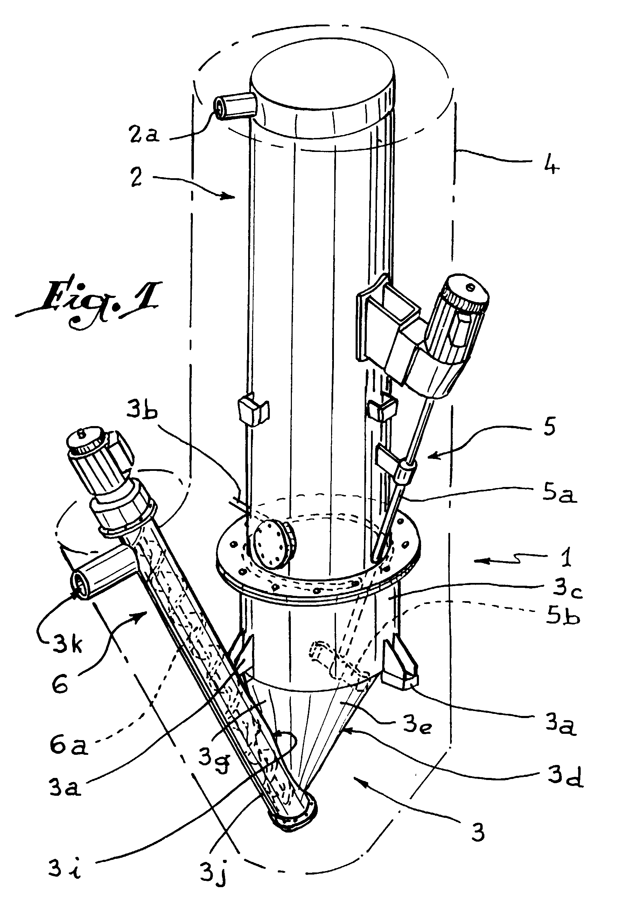

On a représenté en fig. 1 un dispositif de fabrication et d'extraction 1 de particules solides comportant une colonne d'échange 2 solidaire dans sa partie inférieure d'un réceptacle 3 qui vient prendre appui au moyen d'équerres 3a sur un châssis non représenté. L'ensemble du dispositif 1 est réalisé en acier inoxydable enveloppé dans un matériau isolant 4 tel que du polyuréthane représenté en traits mixtes.

La colonne d'échange 2 est conforme à celle décrite dans le brevet français 2 630 668 de sorte qu'elle comprend du côté de son extrémité supérieure, c'est-à-dire à l'opposé du réceptacle 3 l'arrivée d'un injecteur 2a. Cet injecteur est muni d'un grand nombre de trous par lesquels se forme le spectre de gouttelettes destiné à produire les billes de particules solides. Le diamètre des gouttelettes de particules peut être ajusté en fonction du diamètre de perçage des trous.

La colonne d'échange 2 supporte également un agitateur 5 dont l'axe 5a est solidaire d'une pale 5b qui est placée à l'intérieur du réceptacle 3.

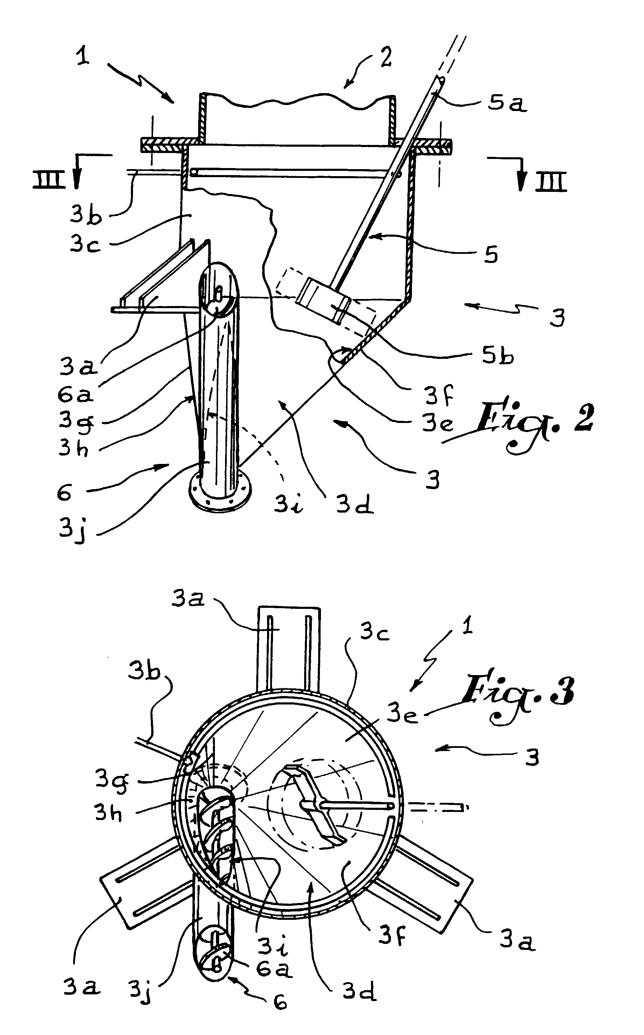

Le réceptacle 3 possède une rampe 3b disposée juste en dessous du niveau de fixation de la colonne d'échange 2 pour amener le liquide réfrigérant à l'intérieur du dispositif 1. Ladite rampe 3b est percée d'une multitude de trous pour diffuser le liquide réfrigérant qui est constitué par exemple d'azote liquide. On note que la rampe 3b présente la forme d'un C pour constituer à l'intérieur du réceptable 3 un passage pour l'arbre d'entraînement 5a de l'agitateur 5 (fig. 2 et 3).

Le réceptacle 3 présente dans sa partie supérieure un profil cylindrique 3c prolongeant la colonne d'échange 2 et à l'intérieur de laquelle est placée la rampe d'injection 3b. Le profil cylindrique 3c se prolonge pour former la partie inférieure du réceptacle 3 par un cône asymétrique 3d (fig. 2).

Le cône asymétrique 3d est constitué d'un assemblage de parois inclinées qui sont conformées pour réaliser deux zones distinctes d'inclinaisons progressives et différentes. La première zone 3e comprend plusieurs parois assemblées les unes aux autres dont l'une au moins extrême 3f est inclinée d'un angle compris entre 40 et 45° par rapport à l'axe vertical du cône 3d. Par contre, la seconde zone 3g prolongeant la première comprend plusieurs parois dont l'une au moins extrême 3h est inclinée d'un angle compris entre 5 et 10° par rapport à l'axe vertical du cône 3d (fig. 2 et 3).

On note que la variation de l'inclinaison des parois constituant la première zone 3e doit être suffisante pour permettre la mise en place de la pale 5b de l'agitateur 5.

Le cône asymétrique 3d comporte dans sa partie inférieure un orifice 3i situé à proximité de la paroi 3h de la seconde zone 3g, c'est-à-dire décalée latéralement par rapport aux axes principaux repérant la base la plus large du cône 3d. L'orifice 3i débouche dans une tubulure inclinée 3i s'étendant en direction du haut et dans laquelle est entraînée en rotation une vis d'Archimède 6a d'un dispositif d'extraction 6 pour l'évacuation en continu des particules solides se trouvant dans le fond du cône asymétrique 3d.

La tubulure 3j comporte dans sa partie supérieure un bec verseur 3k à profil cylindrique pour l'évacuation des billes de particules solides à l'intérieur d'un container étanche pour la conservation des billes.

On constate que la tubulure 3i est disposée dans un plan vertical sensiblement perpendiculaire à celui contenant l'arbre d'entraînement 5a de l'agitateur 5.

Le fonctionnement du dispositif de fabrication des particules solides est identique à celui décrit dans le brevet français 2 630 668. En effet, l'injecteur 2a disperse en haut de la colonne d'échange 2 un spectre de gouttelettes de particules liquides tombant par gravité dans la colonne d'échange. Au contact direct du gaz froid les gouttelettes se congèlent partiellement. Elles chutent par gravité dans la colonne d'échange 2 et tombent ainsi dans le bain de liquide réfrigérant se trouvant dans le cône asymétrique 3d du réceptacle 3 ou elles se solidifient complètement.

La pale large et plate 5b de l'agitateur 5 provoque un mouvement lent du bain d'azote liquide dans le sens d'un vortex. Ce mouvement associé à la forme du cône asymétrique 3d permet de créer une vague dont les forces sont dirigées vers le bas. L'orifice 3i est positionné par rapport au point de convergence des forces mentionnées ci-dessus pour accélérer l'extraction des particules solides se trouvant au fond du cône 3d au moyen du dispositif 6.

On note que la vitesse de rotation qui est lente et assez précise de la pale 5b, évite une brisure turbulente de la vague contre les parois du cône asymétrique 3d. Dans ces conditions, on constate que la consommation d'azote liquide est très proche de celle théorique.

On remarque que les particules solides traversent le bain d'azote liquide de façon tout à fait satisfaisante sans créer d'engorgement au niveau de la surface dudit bain d'azote liquide. En effet, dès que les particules en cours de solidification arrivent à la surface du bain d'azote, ces dernières sont directement entraînées par l'effet de vague dudit bain pour qu'elles traversent celui-ci jusqu'à l'orifice 3i du cône asymétrique 3d.

On note que les particules solides peuvent être constituées à partir de tout mélange acqueux de tout liquide dont la chaleur latente de solidification est inférieure à celle de l'eau pur.

Il doit d'ailleurs être entendu que la description qui précède n'a été donnée qu'à titre d'exemple et qu'elle ne limite nullement le domaine de l'invention dont on ne sortirait pas en remplaçant les détails d'exécution décrits par tous autres équivalents couverts par les revendications.

## Revendications

1. Dispositif pour la fabrication et l'extraction de particules solides en forme de billes du genre comprenant une colonne d'échange (2) alimentée en gaz froid, un injecteur (2a) de particules à solidifier et un réceptacle (3) supportant la colonne et dont le fond comporte un orifice (3i) d'évacuation des particules solidifées en forme de billes, ledit orifice (3i) communiquant avec une tubulure (3i) dans laquelle est entraînée en rotation une vis d'Archimède (6a) d'un dispositif d'extraction (6) pour l'évacuation en continu des particules solides, caractérisé en ce que ledit fond présente la forme d'un cône (3d) à profil asymétrique constitué d'un assemblage de parois inclinées (3f, 3h) conformées pour réaliser deux zones (3e, 3g) distinctes d'inclinaisons progressives et différentes, une pale (5b) d'un agitateur (5) plongeant à l'intérieur dudit cône (3d) asymétrique pour déplacer, dans un mouvement lent, un bain de liquide réfrigérant contenu dans le receptacle en créant une vague dont les forces sont dirigées vers le bas.

2. Dispositif suivant la revendication 1, caractérisé en ce que le réceptacle (3) présente une partie supérieure cylindrique (3c) qui se prolonge dans la partie inférieure dudit réceptacle par ledit cône asymétrique (3d).

3. Dispositif suivant la revendication 2, caractérisé en ce que l'axe (5a) de rotation de ladite pale (5b) dudit agitateur est orienté obliquement par rapport à l'axe principal de ladite partie cylindrique (3c).

4. Dispositif suivant la revendication 1, caractérisé en ce que la première zone (3e) comporte un assemblage de parois dont l'une au moins extrême (3f) est inclinée d'un angle compris entre 40 et 45° par rapport à l'axe vertical du cône asymétrique (3d).

5. Dispositif suivant la revendication 4, caractérisé en ce que la seconde zone (3g) comporte un assemblage de parois dont l'une au moins extrême (3h) est inclinée d'un angle compris entre 5 et 10° par rapport à l'axe vertical du cône asymétrique (3d).

6. Dispositif suivant la revendication 5, caractérisé en ce que l'orifice (3i) est décalé par rapport aux axes principaux repérant la base la plus large du cône asymétrique (3d) pour se trouver à proximité de la paroi extrême (3h) de la seconde zone (3g).

7. Dispositif suivant la revendication 6, caractérisé en ce que la tubulure (3j) s'étend en direction du haut de manière inclinée par rapport au réceptacle (3).

8. Dispositif suivant la revendication 7, caractérisé en ce que la tubulure (3j) se trouve dans un plan vertical perpendiculaire à celui contenant l'agitateur (5).

9. Dispositif suivant la revendication 2, caractérisé en ce que le réceptacle (3) comporte dans sa partie supérieure cylindrique (3c) une rampe d'alimentation (3b) en forme de C pour constituer un passage pour l'arbre (5a) de l'agitateur (5).

10. Dispositif suivant la revendication 1, caractérisé en ce que la pale (5b) de l'agitateur (5) est partiellement introduite à l'intérieur du bain de liquide réfrigérant contenu à l'intérieur du cône asymétrique (3d).

11. Dispositif suivant la revendication 4, caractérisé en ce que la pale (5b) de l'agitateur (5) est placée dans la première zone (3e) du cône asymétrique (3d) c'est-à-dire au niveau où la paroi extrême (3f) est la plus inclinée.

12. Procédé pour la fabrication et l'extraction de particules solides en forme de billes, consistant à disperser par gravité un spectre de gouttelettes de particules dans une colonne de gaz froid pour que les gouttelettes traversent par gravité ladite colonne de gaz froid et se refroidissent pour se solidifier superficiellement avant de tomber dans un bain de liquide réfrigérant et à extraire en continu les billes du bain de liquide réfrigérant, caractérisé en ce qu'il consiste en outre à déplacer le bain de liquide réfrigérant dans un mouvement lent suivant le sens d'un vortex dans un cône à profil asymétrique constitué d'un assemblage de parois inclinées conformées pour réaliser deux zones distinctes d'inclinaison progressives et différentes, de façon à créer une vague dont les forces sont dirigées vers le bas pour permettre la descente des gouttelettes de particules pour qu'elles se solidifient entièrement sous forme de billes.

13. Procédé selon la revendication 12, caractérisé en ce que le liquide réfrigérant est constitué d'azote liquide.

14. Procédé selon la revendication 12, caractérisé en ce que les particules solides sont constituées à partir d'un mélange aqueux ou tout liquide dont la chaleur latente de solidification est inférieure à celle de l'eau.

## Patentansprüche

1. Vorrichtung zur Herstellung und Entfernung von Feststoffteilchen in der Art von Kügelchen, bestehend aus einer mit kaltem Gas gefüllten Austauschersäule (2), einem Einspritzeinlass (2a) zum Einbringen der zu verfestigenden Teilchen und einem Sammelbehälter (3), der die Austauschersäule trägt und an dessen Grund eine Austragöffnung (3i) für die Feststoffteilchen in Form von Kügelchen angeordnet ist, wobei die Austragöffnung mit einem Rohr (3j) verbunden ist, in dem eine archimedische Schraube (6a) zum andauernden Austragen der Feststoffteilchen durch eine Austragsvorrichtung (6) drehbar angeordnet ist, dadurch gekennzeichnet, dass der Grund die Form eines unsymmetrischen Kegels (3d) hat, der aus geneigten Wandungen derart zusammengesetzt ist, dass zwei Zonen (3e, 3g) fortschreitend deutlich unterschiedlicher Neigung vorhanden sind, und dass ein Rührblatt (5b) einer Rührvorrichtung (5) in das Innere des unsymmetrischen Kegels (3d) ragt, um das im Sammelbehälter enthaltene Bad der Kühlflüssigkeit in einer langsamen Bewegung zu verschieben, in dem eine Welle erzeugt wird, deren Kräfte nach unten gerichtet sind.

2. Vorrichtung nach Anspruch 1, dadurch gekennzeichnet, dass der Sammelbehälter (3) einen oberen zylinderförmigen Abschnitt (3c) hat, der sich in den unteren Abschnitt des genannten unsymmetrischen Kegels (3d) fortsetzt.

3. Vorrichtung nach Anspruch (2), dadurch gekennzeichnet, dass die Antriebsachse (5a) des Rührblattes (5b) der Rührvorrichtung (5) in Bezug zur Hauptachse des zylindrischen Abschnittes (3c) schräg verlaufend angeordnet ist.

4. Vorrichtung nach Anspruch 1, dadurch gekennzeichnet, dass die erste Zone (3e) aus mehreren miteinander verbundenen, geneigten Wandungen besteht, von denen eine am wenigsten extreme Wandung (3f) in einem Winkel zwischen 40 und 45° zur vertikalen Achse des unsymmetrischen Kegels (3d) verläuft.

5. Vorrichtung nach Anspruch 4, dadurch gekennzeichnet, dass die zweite Zone (3g) aus mehreren miteinander verbundenen, geneigten Wandungen besteht, von denen eine am wenigsten extreme Wandung (3h) in einem Winkel zwischen 5 und 10° in Bezug zur vertikalen Achse des unsymmetrischen Kegels (3d) verläuft.

6. Vorrichtung nach Anspruch 5, dadurch gekennzeichnet, dass die Austragsöffnung (3i) in Bezug zu den Hauptachsen, die die grösste Weite der Basis des unsymmetrischen Kegels (3d) bestimmen, verschoben ist und sich in der Nähe der äusseren Wandung (3h) der zweiten Zone (3g) befindet.

7. Vorrichtung nach Anspruch 6, dadurch gekennzeichnet, dass das Rohr (3j) in Bezug zum Sammelbehälter (3) schräg geneigt nach oben verläuft.

8. Vorrichtung nach Anspruch 7, dadurch gekennzeichnet, dass das Rohr (3j) sich in einer Ebene senkrecht zu der Ebene befindet, in der die Rührvorrichtung (5) angeordnet ist.

9. Vorrichtung nach Anspruch 2, dadurch gekennzeichnet, dass der Sammelbehälter (3) in seinem oberen zylindrischen Abschnitt (3c) einen C-förmigen Einspritzeinlass (3b) hat, so dass eine Durchtrittsöffnung für die Antriebsachse (5a) der Rührvorrichtung (5) gegeben ist.

10. Vorrichtung nach Anspruch 1, dadurch gekennzeichnet, dass das Rührblatt (5b) der Rührvorrichtung (5) teilweise in das Innere des Bades der Kühlflüssigkeit geführt ist, die im Inneren des unsymmetrischen Kegels (3d) enthalten ist.

11. Vorrichtung nach Anspruch 4, dadurch gekennzeichnet, dass das Rührblatt (5b) der Rührvorrichtung (5) in der ersten Zone (3e) des unsymmetrischen Kegels (3d) angeordnet ist, an der Stelle, an die die äussere Wandung (3f) am stärksten geneigt ist.

12. Verfahren zur Herstellung und Entfernung von Feststoffteilchen in Form von Kügelchen durch Verteilen durch Schwerkraft einer Anzahl von Teilchentröpfchen in einer Austauschersäule mit Kühlgas, damit die Tröpfchen aufgrund der Schwerkraft die Austauschersäule mit dem Kühlgas durchqueren und sich durch Abkühlen an der Oberfläche verfestigen, bevor sie in ein Bad mit Kühlflüssigkeit fallen und andauernd als Kügelchen aus dem Bad mit Kühlflüssigkeit entfernt werden, dadurch gekennzeichnet, dass eine Verschiebung des Bades der Kühlflüssigeit in einer langsamen Bewegung in Richtung eines Wirbels in einem Kegel mit unsymmetrischem Profil gegeben ist, der aus miteinander verbundenen geneigten Wandungen mit zwei fortschreitend unterschiedlich geneigten Zonen besteht, derart, dass eine Welle erzeugt ist, deren Kräfte nach unten gerichtet sind, um das Absteigen der Teilchentröpfchen zu ermöglichen, damit sie sich vollständig in Form von Kügelchen verfestigen.

13. Verfahren nach Anspruch 12, dadurch gekennzeichnet, dass die Kühlflüssigkeit aus flüssigem Stickstoff besteht.

14. Verfahren nach Anspruch 12, dach gekennzeichnet, dass die Feststoffteilchen aus einem wässrigen Gemisch oder einer Flüssigkeit erhalten werden, deren latente Erstarrungswärme geringer als die des Wassers ist.

## Claims

1. Device for producing and extracting solid particles in the form of beads, of the kind comprising an exchange column (2) fed with cold gas, an injector (2a) of particles to be solidified and a receptacle (3) supporting the column and the bottom of which has an orifice (3i) for discharging the bead-shaped solidified particles, the said orifice (3i) communicating with a pipe (3j) in which an Archimedian screw (6a) of an extraction device (6) is rotated for the continuous discharge of the solid particles, characterized in that the said bottom is in the shape of a cone (3d) with an asymmetric profile, consisting of a set of inclined walls (3f, 3h) shaped to produce two separate regions (3e, 3g) of progressive and different inclinations, a blade (5b) of a stirrer (5) being plunged into the said asymmetric cone (3d) so as to agitate, with a slow movement, a pool of refrigerant liquid contained in the receptacle, creating a wave the forces of which are directed downwards.

2. Device according to Claim 1, characterized in that the receptacle (3) has a cylindrical upper part (3c) which is extended in the lower part of the said receptacle by the said asymmetric cone (3d).

3. Device according to Claim 2, characterized in that the spindle (5a) for rotating the said blade (5b) of the said stirrer is directed at an angle with respect to the main axis of the said cylindrical part (3c).

4. Device according to Claim 1, characterized in that the first region (3e) comprises a set of walls, at least one extreme wall (3f) of which is inclined by an angle of between 40 and 45° with respect to the vertical axis of the asymmetric cone (3d).

5. Device according to Claim 4, characterized in that the second region (3g) comprises a set of walls, at least one extreme wall (3h) of which is inclined by an angle of between 5 and 10° with respect to the vertical axis of the asymmetric cone (3d).

6. Device according to Claim 5, characterized in that the orifice (3i) is offset with respect to the main axes that identify the broadest base of the asymmetric cone (3d), to lie near the extreme wall (3h) of the second region (3g).

7. Device according to Claim 6, characterized in that the pipe (3j) extends upwards at an angle to the receptacle (3).

8. Device according to Claim 7, characterized in that the pipe (3j) lies in a vertical plane perpendicular to the one containing the stirrer (5).

9. Device according to Claim 2, characterized in that the receptacle (3) comprises, in its cylindrical upper part (3c), a feed line (3b) which is in the shape of a C so as to leave space for the passage of the shaft (5a) of the stirrer (5).

10. Device according to Claim 1, characterized in that the blade (5b) of the stirrer (5) is partially introduced into the pool of refrigerant liquid contained inside the asymmetric cone (3d).

11. Device according to Claim 4, characterized in that the blade (5b) of the stirrer (5) is placed in the first region (3e) of the asymmetric cone (3d), that is to say where the extreme wall (3f) is the most steeply inclined.

12. Method for producing and extracting solid particles in the form of beads, consisting in dispersing under gravity an array of droplets of particles into a column of cold gas so that the droplets pass along the said column of cold gas under gravity and cool so that they solidify on their surface before dropping into a pool of refrigerant liquid, and in continuously extracting the beads from the pool of refrigerant liquid, characterized in that it further consists in agitating the pool of refrigerant liquid with a slow movement in the direction of a vortex in a cone of asymmetric profile that consists of a set of inclined walls shaped to produce two separate regions of progressive and different inclinations, so as to create a wave, the forces of which are directed downwards, in order to allow the droplets of particles to travel downwards so that they solidify completely in the form of beads.

13. Method according to Claim 12, characterized in that the refrigerant liquid consists of liquid nitrogen.

14. Method according to Claim 12, characterized in that the solid particles are made from an aqueous mixture or any liquid whose latent heat of solidification is lower than that of water.
